# EUROPÄISCHE PATENTSCHRIFT

(11) **EP 1 910 007 B1**
(45) Veröffentlichungstag und Bekanntmachung des Hinweises auf die Patenterteilung: **07.09.2011**
(21) Anmeldenummer: 06777564.3
(22) Anmeldetag: 04.07.2006
(51) Int. Cl.: B23K 1/005, F01D 5/00, B23P 6/00, B23P 15/04, F01D 5/30, B23K 101/00

(54) **VERFAHREN ZUM STOFFSCHLÜSSIGEN FÜGEN VON BAUTEILEN UNTER VERWENDUNG VON NANOPARTIKELN**
METHOD OF INTEGRALLY BONDING COMPONENTS USING NANOPARTICLES
PROCEDE POUR ASSEMBLER DES COMPOSANTS PAR LIAISON DE MATIERE EN UTILISANT DES NANOPARTICULES

(30) Priorität: 08.07.2005 DE 102005032739
(43) Veröffentlichungstag der Anmeldung: 16.04.2008
(73) Patentinhaber: SIEMENS AKTIENGESELLSCHAFT, 80333 München (DE)
(72) Erfinder: KRÜGER, Ursus, 14089 Berlin (DE); STEINBACH, Jan, 13353 Berlin (DE); ULLRICH, Raymond, 14621 Schönwalde (DE)
(86) Internationale Anmeldenummer: PCT/EP2006/063870
(87) Internationale Veröffentlichungsnummer: WO 2007/006694

(56) Entgegenhaltungen:
- EP-B- 0 868 253
- DE-A1- 10 256 414
- US-A- 4 676 843
- US-A1- 2004 050 913
- US-A1- 2004 173 304
- W.M. DRAKE ET AL: "BRAZING USING 2.45 GHZ MICROWAVES" PROCEEDINGS FROM MATERIALS SOLUTIONS CONFERENCE ON JOINING OF ADVANCED AND SPECIALTY MATERIALS, XX, XX, 13. Oktober 2003 (2003-10-13), Seiten 45-50, XP008058198

## Beschreibung

Die vorliegende Erfindung betrifft ein Verfahren zum stoffschlüssigen Fügen von Fügeflächen aufweisenden Fügeteilen

gemäß din Oberbegriff des Anspruchs 1 (siche, z.B., DE 102 56 414).

Derartige Verfahren kommen beispielsweise im Umfeld der Herstellung von geometrisch komplexen Bauteilen, insbesondere für Hochtemperaturanwendungen, zum Einsatz. Solche Bauteile werden derzeit in der Regel mit Gussverfahren hergestellt, wobei Gussfehler die Ausbringungsrate vermindern und das Endprodukt verteuern können.

Daneben können Verfahren zum stoffschlüssigen Fügen auch zum Reparieren betriebsbedingter Beschädigungen an geometrisch komplexen Bauteilen herangezogen werden. Insbesondere bei Bauteilen für Hochtemperaturanwendungen könne betriebsbedingte Beschädigungen nur selten mit den gebräuchlichen Schweiß- und Lötverfahren strukturell repariert werden, da die Festigkeit der verwendeten Zusatzwerkstoffe nicht ausreicht, um die strukturelle Integrität in der Hochtemperaturumgebung zu gewährleisten oder weil prozesstechnische Gegebenheiten eine werkstofflich wesensgleiche homogene Nachbildung im Reparaturbereich nicht zulassen.

Füge- und Reparaturverfahren unter Verwendung eines Materials, welches sich stoffschlüssig mit den zu fügenden oder zu reparierenden Teilen verbindet sind aus dem Stand der Technik bekannt. Derartige Verfahren sind beispielsweise aus DE 28 10 598 A1 oder JP 2000 239712 A bekannt.

In DE 28 10 598 A1 ist ein Verfahren zum Reparieren eines Risses in der Oberfläche eines Gegenstandes aus einer Superlegierung auf Nickelbasis beschrieben, indem eine pulverförmige Reparaturlegierung oberhalb des Risses auf die Oberfläche des Gegenstandes aufgebracht wird. Das Legierungsmaterial weist eine gegenüber dem Material der Superlegierung derart geänderte Zusammensetzung auf, dass es bereits bei einer Temperatur schmilzt und fließt, die so niedrig ist, dass die mechanischen Eigenschaften des Gegenstandes nicht nachteilig beeinflusst werden.

Die JP 2000 239712 A beschreibt das Verbinden von Werkstücken aus verschiedenen Materialien durch Einbringen eines Metallpulvers zwischen die Werkstücke und Versintern durch den Fluss eines hohen elektrischen Stromes durch die Verbindungsstelle.

Gemäß der US 2005/0036898 A1 kann die Verbindung zwischen einer Welle und einer Nabe beispielsweise mittels eines pulverförmigen Zusatzstoffes erfolgen. Dieses wird in den Spalt zwischen Welle und Nabe eingebracht, wobei das Pulver ein feines Pulver mit Partikelgrößen zwischen 10 und 0,1 µm ist. Der Verbund aus Welle und Nabe kann nach Einbringen des pulverförmigen Zusatzstoffes einer Temperbehandlung unterzogen werden, welche zu einer stoffschlüssigen Verbindung von Welle und Nabe führt, ohne dass die Fügeteile selbst angeschmolzen werden.

Gemäß der DE 102 56 414 A1 und gemäß der EP 868 253 B1 sind weiterhin Reparaturverfahren, beispielsweise für Turbinenschaufeln beschrieben, bei denen schadhafte Stellen dadurch ausgebessert werden, dass eine Aussparung in das schadhafte Teil eingebracht und durch ein angepasstes Ersatzteil ausgefüllt wird. Diese beiden Bauteile werden durch Löten miteinander verbunden, wobei als Lotwerkstoff ein Werkstoff mit angepassten Eigenschaften Verwendung finden kann. Derartige Lotwerkstoffe müssen eine geringere Schmelztemperatur aufweisen, als die zu fügenden Fügeteile, damit diese beim Lötverfahren ihre Werkstoffeigenschaften beibehalten.

Gemäß der US 2004/0050913 A1 ist weiterhin beschrieben, dass man in einen Lotwerkstoff für die vorstehend genannte verfahren auch Partikel des Materials der Fügeteile einbringen kann, wenn diese nanoskalig ausgeführt sind. Hierdurch wird erreicht, dass der Schmelzpunkt der nanoskaligen Partikel so weit verringert wird, dass dieser dem verwendeten Lotmaterial angepasst ist. Dadurch können die Partikel zusammen mit dem restlichen Lotmaterial bei den erforderlichen geringen Temperaturen verarbeitet werden.

Aufgabe der vorliegenden Erfindung ist es, ein Verfahren zum stoffschlüssigen Fügen von Fügeflächen aufweisenden Fügeteilen zur Verfügung zu stellen, mit dem sich artgleiche Teile unter Verwendung eines artgleichen Pulvers fügen lassen, ohne dass dabei die strukturelle Integrität der Fügeteile beeinträchtigt wird.

Diese Aufgabe wird durch ein Verfahren zum stoffschlüssigen Fügen nach Anspruch 1 gelöst. Die abhängigen Ansprüche enthalten vorteilhafte Ausgestaltungen der Erfindung.

Im erfindungsgemäßen Verfahren zum stoffschlüssigen Fügen von Fügeflächen aufweisenden Fügeteilen werden, wenn diese an ihren Fügeflächen zusammengesetzt sind, ultrafeine Partikel in den Fügespalt zwischen den Fügeflächen eingebracht, wobei die ultrafeinen Partikel ein Partikelmaterial bilden. Sodann wird ein Aufschmelzen und Wiedererstarren des Partikelmaterials herbeigeführt.

Als Material der Fügeteile sowie als Partikelmaterial kann ein metallischer Werkstoff, ein keramischer Werkstoff oder eine Komposition daraus Verwendung finden. Im erfindungsgemäßen Verfahren bestehen die Fügeteile und die ultrafeinen Partikel aus artgleichem Material.

Das stoffschlüssige Fügen von artgleichen Fügeteilen bei Verwendung eines artgleichen Partikelmaterials ist insbesondere aufgrund der Nanoskaligkeit der Partikel möglich. Unter dem Begriff nanoskalige Partikel sollen, gemäß der Erfindung, ultrafeine Partikel mit Partikeldurchmessern von maximal 100 nm zu verstehen sein.

Die geringen Abmessungen der nanoskaligen Partikel führen zu einer spürbaren Verminderung der Schmelztemperatur des Partikelmaterials. Ein Aufschmelzen des Partikelmaterials wird, gemäß der Erfindung, daher mit einer Temperatur herbeigeführt, die deutlich unterhalb der Schmelztemperatur eines artgleichen Volumenmaterials liegt. Dies ermöglicht, gemäß der Erfindung, ein stoffschlüssiges Fügen, ohne dass dabei die strukturelle Integrität des artgleichen Materials der Fügeteile beeinträchtigt wird.

Geringe Fügespaltbreiten und weit unter dem Schmelzpunkt des Materials der Fügeteile liegende Prozesstemperaturen führen im erfindungsgemäßen Verfahren zu deutlich spannungsärmeren Verbindungsrandzonen als bei Schweiß- oder Lötverfahren. Auf diese Weise lassen sich etwa Bauteile reparieren, die im Betrieb hohen thermischen und mechanischen Belastungen ausgesetzt sind. Ein Beispiel für solche Bauteile sind Turbinenbauteile wie etwa Turbinenschaufeln. Mit dem erfindungsgemäßen Verfahren können beschädigte Turbinenschaufeln repariert werden, indem die Turbinenschaufel im Bereich der Beschädigung ausgearbeitet wird und ein passgenaues Einsatzstück aus artgleichem Material in die ausgearbeitete Stelle eingesetzt wird. Mittels des nanoskaligen Pulvers aus artgleichem Material kann das Einsatzstück stoffschlüssig mit dem Turbinenbauteil zusammengefügt werden, ohne die strukturelle Integrität des Turbinenbauteils oder des Einsatzstückes nachteilig zu beeinflussen. Dadurch kann die mögliche Betriebsdauer von Turbinenbauteilen erheblich verlängert werden, da auch die Reparatur in Bereichen möglich wird, die mittels Löt- oder Schweißverfahren nicht zu reparieren sind, ohne die strukturelle Integrität des Turbinenbauteils erheblich zu stören.

Die nanoskaligen Partikel können bspw. in Form eines Pulvers vorliegen, in dem alle Partikel aus demselben Partikelmaterial bestehen. Das Partikelmaterial kann hierbei ein reines Material oder eine Mischung aus mehreren Materialkomponenten sein. Falls das Partikelmaterial verschiedene Materialkomponenten aufweist, kann es auch in Form eines Pulvers vorliegen, welches verschiedene Partikelsorten umfasst, die jeweils aus einem reinen Material bestehen. Das Partikelmaterial ergibt sich dann erst durch die Mischung der unterschiedlichen Partikel. Eine derartige Pulvermischung aus nanoskaligen Partikeln wird auch als nanodisperses Pulver bezeichnet.

In einer Ausgestaltung des erfindungsgemäßen Verfahrens erfolgt das Einbringen der nanoskaligen Partikel in den Fügespalt dadurch, dass wenigstens eines der Fügeteile in hochfrequente mechanische Schwingung versetzt wird. Das Pulver kann dann beispielsweise auf die Oberfläche der Fügeteile im Bereich des Fügespaltes aufgebracht und durch die Schwingung ins Innere des Fügespaltes transportiert werden. Außer dem Transportieren der nanoskaligen Partikel in den Fügespalt kann die hochfrequente mechanische Schwingung auch das Aufschmelzen des Partikelmaterials herbeiführen oder unterstützen, sofern der Energieeintrag aufgrund der Schwingung in das Partikelmaterial geeignet gewählt ist.

Das Aufschmelzen des Partikelmaterials kann jedoch auch durch eine geeignete Wärmebehandlung herbeigeführt werden. Zudem kann vor und/oder nach dem Aufschmelzen und Wiedererstarren des Partikelmaterials eine Wärmebehandlung erfolgen, um das Partikelmaterial zu homogenisieren.

Das Durchführen der genannten Wärmebehandlungen kann beispielsweise mittels lokalisiertem Einstrahlen von Mikrowellenstrahlung im Bereich des Fügespaltes erfolgen. Die Frequenz der Mikrowellenstrahlung kann hierbei im Bereich zwischen ca. 30 und ca. 110 GHz liegen und die Flächenleistung der Mikrowellenstrahlung im Bereich bis ca. 15 kW pro mm². Die genauen Parameter hängen einerseits davon ab, ob eine Homogenisierung des Partikelmaterials oder ein Aufschmelzen des Partikelmaterials herbeigeführt werden soll und andererseits davon, welches Partikelmaterial vorliegt.

Das erfindungsgemäße Verfahren kann insbesondere auch unter Vakuumbedingungen und/oder unter Beheizung stattfinden.

Weitere Merkmale, Eigenschaften und Vorteile der Erfindung ergeben sich aus der nachfolgenden Beschreibung eines Ausführungsbeispiels unter Bezugnahme auf die beiliegenden Figuren.
- Figur 1: zeigt ein beschädigtes Bauteil, welches mit dem er- findungsgemäßen Verfahren repariert werden soll.
- Figur 2: zeigt das Bauteil aus Anspruch 1 nach Ausarbeitung des beschädigten Bereiches.
- Figur 3: zeigt das Bauteil aus Fig. 2 nach dem Einsetzen ei- nes Passstückes und dem Aufbringen eines nanoskali- gen Pulvers aus artgleichem Material.
- Figur 3a: zeigt den Bereich des Einsatzes aus Fig. 3 in einer vergrößerten Darstellung.
- Figur 4: zeigt das Bauteil aus Fig. 3 während des Sinterns.
- Figur 5: zeigt das reparierte Bauteil.

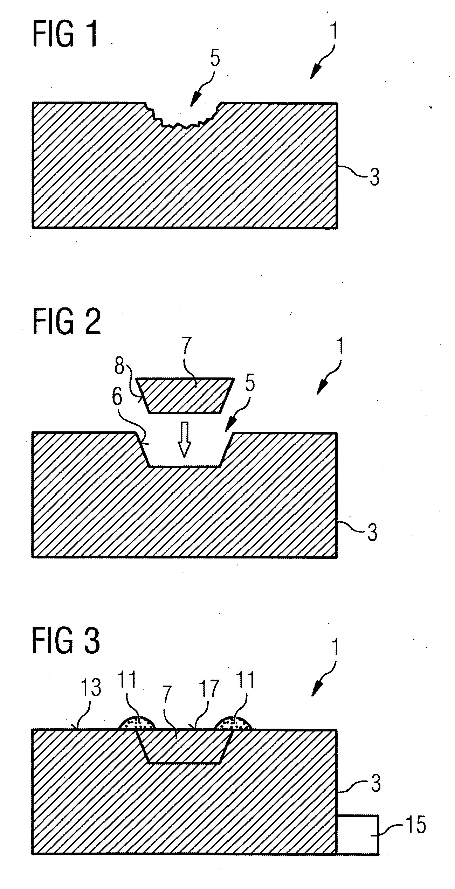

Nachfolgend wird das erfindungsgemäße Verfahren mit Bezug auf das Reparieren einer beschädigten Turbinenschaufel beschrieben. Fig. 1 zeigt daher in einer stark schematischen Darstellung einen Schnitt durch eine Wand 3 einer Gasturbinenschaufel 1, die an ihrer Außenseite eine beschädigte Stelle 5 aufweist. Die beschädigte Wand 3 der Gasturbinenschaufel 1 ist aus einer Superlegierung auf Eisen-, Nickel- oder Kobaltbasis hergestellt. Solche Superlegierungen sind aus EP 1 204 776 B1, EP 1 306 454 B1, EP 1 319 729 A1, WO 99/67435 und WO 00/44949 bekannt. Auf den Inhalt dieser Dokumente wird daher bezüglich geeigneter Superlegierungen verwiesen.

Nachdem die beschädigte Stelle 5 mechanisch ausgearbeitet worden ist, beispielsweise mittels eines Fräs- oder Bohrprozesses, wird ein passgenaues Einsatzstück 7 in die ausgearbeitete beschädigte Stelle 5 eingesetzt. Das Einsatzstück 7 ist aus einem artgleichen Material, insbesondere aus derselben Superlegierung wie die Turbinenschaufel 1 hergestellt. Die Turbinenschaufel 1 und das Einsatzstück 7 bilden dabei Fügeteile, welche zueinander komplementäre Fügeflächen 6 und 8 aufweisen.

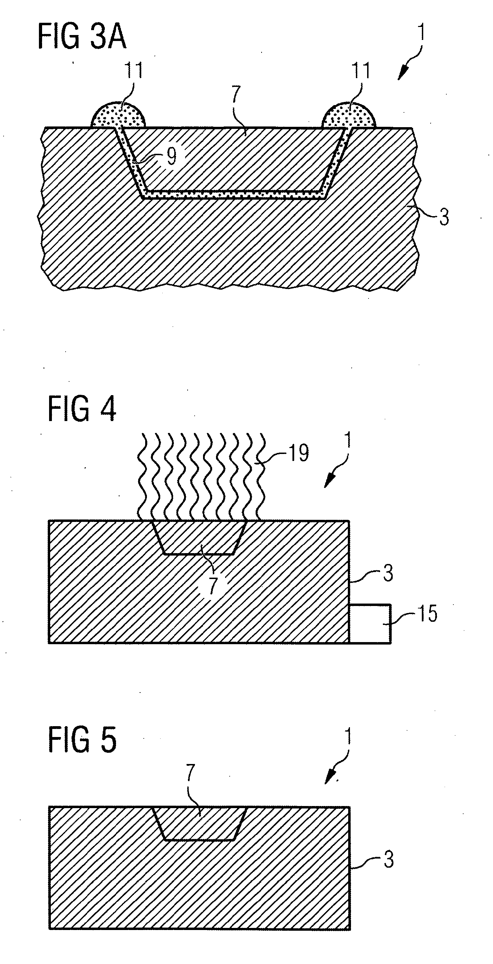

Nach dem Einsetzen der Einsatzstückes 7 in die ausgearbeitet beschädigte Stelle 5 verbleibt zwischen den Fügeflächen 6, 8 ein geringer Fügespalt 9 (vgl. Fig. 3a). Hierbei wird eine möglichst geringe Breite des Fügespaltes 9 angestrebt. Je passgenauer das Einsatzstück 7 ausgebildet ist, desto geringer ist die Breite des Fügespaltes 9.

Im Bereich des Fügespaltes 9 wird ein ultrafeines Pulver auf die Oberfläche 13 der Wand 3 und die Oberfläche 17 des Einsatzstückes 7 aufgebracht. Die Pulverpartikel des ultrafeinen Pulvers bestehen aus einem zur Superlegierung artgleichen Material, insbesondere aus derselben Superlegierung wie die Turbinenschaufel 1. Gleichzeitig wird ein Schwingungsanreger 15 derart mit der Turbinenschaufel 1 gekoppelt, dass er hochfrequente mechanische Schwingungen in die Wand 3 der Turbinenschaufel 1 einkoppeln kann. Als Schwingungsanreger kommen insbesondere piezoelektrische Schwingungsanreger 15 in Betracht. Mittels des Schwingungsanregers 15 wird die Wand 3 in hochfrequente mechanische Schwingung versetzt, die zu einem Einfließen des ultrafeinen Pulvers 11 in den Fügespalt 9 und zu einer gleichmäßigen Verteilung im Fügespalt 9 führen.

Sobald das Pulver 11 gleichmäßig im Fügespalt 9 verteilt ist, wird Mikrowellenstrahlung 19 mit einer Frequenz im Bereich von 30 bis 110 GHz und einer Flächenleistung bis ca. 15 kW pro mm² lokal in den Bereich, in dem sich das Einsatzstück 7 sowie das Pulver 11 befinden, eingestrahlt (siehe Fig. 4). Vorzugsweise wird das Einkoppeln der mechanischen Schwingung während des Einstrahlens der Mikrowellenstrahlung 19 fortgesetzt, sodass die erforderliche Prozesstemperatur und der erforderliche Anpressdruck teilweise schon durch die mechanische Schwingung realisiert werden. Auf diese Weise braucht weniger Energie mittels der Mikrowellenstrahlung 19 eingebracht zu werden.

Die lokal in den Bereich des Fügespaltes 19 eingebrachte Energie führt zu einem Versintern des Pulvers 11 im Fügespalt 9. Dabei schmelzen die Pulverpartikel, deren Abmessungen im Nanometerbereich mit, gemäß der Erfindung, einem Partikel durchmesser von maximal 100 nm liegen und vorzugsweise im Bereich zwischen 1 und 100 nm, auf und sorgen nach dem Wiedererstarren für eine stoffschlüssige Verbindung zwischen der Wand 3 der Turbinenschaufel 1 und dem Einsatzstück 7.

Aufgrund der geringen Abmessungen der Pulverpartikel liegt ihre Schmelztemperatur selbst dann, wenn sie aus demselben Material wie die Turbinenschaufel 1 und der Einsatz 7 hergestellt sind, unterhalb der Schmelztemperatur des Wandmaterials und des Einsatzmaterials. Auf diese Weise liegt, gemäß der Erfindung, die Prozesstemperaturen unterhalb des Schmelzpunktes der Superlegierung der Wand 3 und des Einsatzstückes 7.

Mittels einer weiteren Einstrahlung der Mikrowellenstrahlung 19 nach dem Sintern kann eine Gefügehomogenisierung im gesinterten Material herbeigeführt werden.

Das gesamte Verfahren kann in einer Vakuumkammer oder in einem Vakuumofen ausgeführt werden. Der Ofen bietet die Möglichkeit, die Turbinenschäufel 1 während des gesamten Prozesses auf einer bestimmten Temperatur zu halten. Außerdem ist es im Rahmen des Verfahrens auch möglich, bereits vor dem Sintern eine Wärmebehandlung mittels Mikrowellenstrahlung im Bereich des Fügespaltes vorzunehmen.

Die fertig reparierte Turbinenschaufel ist in Fig. 5 dargestellt. Der Einsatz 7 ist aufgrund des Sinterprozesses stoffschlüssig mit der Wand 3 der Turbinenschaufel 1 fest verbunden.

Im mit Bezug auf die Fig. 1 bis 5 beschriebenen Verfahren ist das ultrafeine Pulver alleine durch die horizontale Orientierung der Turbinenschaufel 1 derart, dass die zu reparierende Stelle 5 nach oben zeigt, gegen Herausfallen gesichert. Alternativ ist es auch möglich, das Pulver durch besondere Maßnahmen, beispielsweise eine die Fügestelle umgebende Manschette oder Abdichtung gegen Herausfallen zu sichern. Dies ist insbesondere dann von Bedeutung, wenn statt einer Reparatur einer beschädigten Stelle ein Zusammenfügen zweier Werkstücke über den gesamten Werkstückquerschnitt erfolgen soll.

Obwohl das erfindungsgemäße Verfahren mit Bezug auf das Fügen zweier aus einer metallischen Legierung bestehenden Fügeteile beschrieben worden ist, ist das erfindungsgemäße Verfahren auch dann anwendbar, wenn keramische Fügeteile oder Fügeteile aus einem Metall-Keramik-Verbund zusammengefügt werden sollen. Insbesondere ist es bei Verwendung einer geeigneten Zusammensetzung des ultrafeinen Pulvers auch denkbar, ein metallisches und ein keramisches Fügeteil zusammenzufügen.

## Patentansprüche

1. Verfahren zum stoffschlüssigen Fügen von Fügeflächen (6, 8) aufweisenden Fügeteilen (1, 7) mit den Schritten
- Zusammensetzen der Fügeteile (1, 7) an ihren Fügeflächen (6, 8),
- Einbringen von Partikeln (11) in den Fügespalt (9) zwischen den Fügeflächen (6, 8) und
- Aufschmelzen und Wiedererstarren des Partikelmaterials, wobei das Aufschmelzen mit einer Temperatur herbeigeführt wird, die unterhalb der Schmelztemperatur der artgleichen Fügeteile (1,7) liegt
**dadurch gekennzeichnet,**
**dass** die Partikel (11) nanoskalig mit einem Partikeldurchmesser von maximal 100 nm sind und ein zum Material beider Fügeteile (1, 7) artgleiches Partikelmaterial bilden, wobei die Temperatur so gewählt wird, dass die strukturelle Integrität der Fügeteile (1,7) erhalten bleibt.

2. Verfahren nach Anspruch 1, in dem die Partikel (11) in Form eines Pulvers (11) vorliegen, in dem alle Partikel (11) aus demselben Partikelmaterial bestehen.

3. Verfahren nach Anspruch 1, in dem die Partikel (11) in Form eines Pulvergemisches (11) vorliegen und das Pulvergemisch (11) Partikel (11) aus unterschiedlichen Materialien enthält, welche im Zusammenwirken das Partikelmaterial ergeben.

4. Verfahren nach einem der Ansprüche 1 bis 3, in dem das Einbringen der nanoskaligen Partikel (11) in den Fügespalt (9) dadurch erfolgt, dass wenigstens eines der Fügeteile (1, 7) in hochfrequente mechanische Schwingungen versetzt wird.

5. Verfahren nach einem der vorangehenden Ansprüche, in dem das Aufschmelzen des Partikelmaterials **dadurch** erfolgt, dass wenigstens eines der Fügeteile (1, 7) in hochfrequente mechanische Schwingungen versetzt wird.

6. Verfahren nach einem der vorangehenden Ansprüche, in dem das Aufschmelzen des Partikelmaterials mittels einer Wärmebehandlung herbeigeführt wird.

7. Verfahren nach einem der vorangehenden Ansprüche, in dem vor und/oder nach dem Aufschmelzen und Wiedererstarren des Partikelmaterials eine Wärmebehandlung erfolgt.

8. Verfahren nach Anspruch 6 oder 7, in dem die Wärmebehandlung durch lokalisiertes Einstrahlen von Mikrowellenstrahlung (19) im Bereich des Fügespaltes (9) erfolgt.

9. Verfahren nach Anspruch 8, **dadurch gekennzeichnet, dass** die Frequenz der Mikrowellenstrahlung (19) im Bereich zwischen ca. 30 und ca. 110 GHz liegt.

10. Verfahren nach Anspruch 8 oder 9, **dadurch gekennzeichnet, dass** die Flächenleistung der Mikrowellenstrahlung (19) im Bereich bis ca. 15 kW/mm² liegt.

11. Verfahren nach einem der vorangehenden Ansprüche, welches unter Vakuumbedingungen durchgeführt wird.

12. Verfahren nach einem der vorangehenden Ansprüche, wobei die Durchführung des Verfahrens unter Beheizung stattfindet.

13. Verfahren nach einem der vorangehenden Ansprüche, in dem
- ein Fügeteil (1) ein zu reparierendes Bauteil (1) mit einem ausgearbeiteten Bereich (5) ist und
- ein weiteres Fügeteil (7) ein Passstück (7) aus artgleichem Material ist, welches in den ausgearbeiteten Bereich (5) eingesetzt wird.

14. Verfahren nach einem der vorangehenden Ansprüche, in dem die Fügeteile (1, 7) und die Partikel (11) aus metallischen oder keramischen Werkstoffen oder Kompositen daraus hergestellt sind.

15. Verfahren nach einem der vorangehenden Ansprüche, in dem wenigstens eines der Fügeteile (1) ein Turbinenbauteil ist.

## Claims

1. Method for integrally joining parts (1, 7) to be joined which have joining surfaces (6, 8), said method comprising the following steps:
- the parts (1, 7) to be joined are assembled at their joining surfaces (6, 8),
- particles (11) are introduced into the joining gap (9) between the joining surfaces (6, 8), and
- the particle material is melted and resolidified, wherein the melting is brought about at a temperature which lies below the melting temperature of the homogeneous parts (1, 7) to be joined,
**characterized**
**in that** the particles (11) are nanoscale with a particle diameter of at most 100 nm and form a particle material of the same kind as the material of the two parts (1, 7) to be joined, wherein the temperature is selected such that the structural integrity of the parts (1, 7) to be joined is retained.

2. Method according to Claim 1, in which the particles (11) are present in the form of a powder (11) in which all the particles (11) consist of the same particle material.

3. Method according to Claim 1, in which the particles (11) are present in the form of a powder mixture (11) and the powder mixture (11) contains particles (11) of different materials which combine to produce the particle material.

4. Method according to one of Claims 1 to 3, in which the nanoscale particles (11) are introduced into the joining gap (9) by making at least one of the parts (1, 7) to be joined oscillate mechanically at a high frequency.

5. Method according to one of the preceding claims, in which the particle material is melted by making at least one of the parts (1, 7) to be joined oscillate mechanically at a high frequency.

6. Method according to one of the preceding claims, in which the particle material is melted by means of heat treatment.

7. Method according to one of the preceding claims, in which heat treatment is effected before and/or after the melting and resolidification of the particle material.

8. Method according to Claim 6 or 7, in which the heat treatment is effected by localized irradiation of microwave radiation (19) in the region of the joining gap (9).

9. Method according to Claim 8, **characterized in that** the frequency of the microwave radiation (19) is in the range of between about 30 and about 110 GHz.

10. Method according to Claim 8 or 9, **characterized in that** the power per unit area of the microwave radiation (19) is in the range up to about 15 kW/mm².

11. Method according to one of the preceding claims, which is carried out under vacuum conditions.

12. Method according to one of the preceding claims, wherein the method is carried out with heating.

13. Method according to one of the preceding claims, in which
- a part (1) to be joined is a component (1) to be repaired with an excavated region (5), and
- a further part (7) to be joined is a fitted piece (7) which is made of material of the same kind and is inserted into the excavated region (5).

14. Method according to one of the preceding claims, in which the parts (1, 7) to be joined and the particles (11) are produced from metallic or ceramic materials or composites thereof.

15. Method according to one of the preceding claims, in which at least one of the parts (1) to be joined is a turbine component.

## Revendications

1. Procédé de jonction par liaison de matière de parties ( 1, 7) de jonction ayant des surfaces (6, 8) de jonction, comprenant les stades de
- assemblage des parties (1, 7 ) de jonction par leurs surfaces ( 6, 8 ) de jonction,
- introduction de particules ( 11 ) dans l'intervalle ( 9 ) entre les surfaces ( 6, 8 ) de jonction, et
- fusion et resolidification du matériau des particules, la fusion étant due à une température, qui est inférieure au point de fusion des parties ( 1, 7 ) de jonction de même type,
**caractérisé**
**en ce que** les particules ( 11 ) sont à l'échelle nano en ayant un diamètre de particules de 100 nm au maximum et forment un matériau en particules de même type que le matériau des deux parties ( 1, 7 ) de jonction, la température étant choisie de manière à laisser subsister l'intégrité structurelle des parties ( 1, 7 ) de jonction.

2. Procédé suivant la revendication 1, dans lequel les particules ( 11 ) se présentent sous la forme d'une poudre ( 11 ), dans laquelle toutes les particules ( 11 ) sont en le même matériau.

3. Procédé suivant la revendication 1, dans lequel les particules ( 11 ) se présentent sous la forme d'un mélange ( 11 ) de poudre et le mélange ( 11 ) de poudre contient des particules de matériaux différents, qui en coopération donnent le matériau en particules.

4. Procédé suivant l'une des revendications 1 à 3, dans lequel l'introduction des particules ( 11 ) à l'échelle nano dans l'intervalle ( 9 ) de jonction s'effectue en soumettant au moins l'une des parties ( 1, 7 ) de jonction à des oscillations mécaniques de haute fréquence.

5. Procédé suivant l'une des revendications précédentes, dans lequel la fusion du matériau en particules s'effectue en soumettant au moins l'une des parties ( 1, 7 ) de jonction à des oscillations mécaniques en haute fréquence.

6. Procédé suivant l'une des revendications précédentes, dans lequel la fusion du matériau en particules est due à un traitement thermique.

7. Procédé suivant l'une des revendications précédentes, dans lequel, avant et/ou après la fusion et la resolidification du matériau en particules, on effectue un traitement thermique.

8. Procédé suivant la revendication 6 ou 7, dans lequel le traitement thermique s'effectue par incidence localisée d'un rayonnement ( 19 ) de micro-ondes dans la zone de l'intervalle ( 9 ) de jonction.

9. Procédé suivant la revendication 8, **caractérisé en ce que** la fréquence du rayonnement ( 19 ) de micro-ondes est comprise entre environ 30 et environ 110 GHz.

10. Procédé suivant la revendication 8 ou 9, **caractérisé en ce que** la puissance par unité de surface du rayonnement ( 19 ) de micro-ondes est dans la plage allant jusqu'à environ 15 kW/mm².

11. procédé suivant l'une des revendications précédentes, qui est effectué sous-vide.

12. procédé suivant l'une des revendications précédentes, dans lequel le procédé s'effectue en chauffant.

13. procédé suivant l'une des revendications précédentes, dans lequel
- une partie ( 1 ) de jonction est un élément ( 1 ) à réparer ayant une zone ( 5 ) façonnée et
- une autre partie de jonction est une pièce ( 7 ) d'adaptation en un matériau de même type, qui est utilisée dans la zone ( 5 ) façonnée.

14. procédé suivant l'une des revendications précédentes, dans lequel les parties ( 1, 7 ) de jonction et les particules ( 11 ) sont en matériau métallique ou céramique ou en leurs composites.

15. procédé suivant l'une des revendications précédentes, dans lequel au moins l'une des parties ( 1 ) de jonction est un élément de turbine.
